# EUROPEAN PATENT APPLICATION

(11) **EP 4 542 030 A1**
(43) Date of publication of application: **23.04.2025**
(21) Application number: 23203810.9
(22) Date of filing: 16.10.2023
(51) Int. Cl.: F03D 17/00, F03D 1/06

(54) **METHOD FOR DETECTING AT LEAST ONE PROPERTY OF A COMPONENT OF OR FOR A WIND TURBINE**

(71) Applicant: Siemens Gamesa Renewable Energy A/S, 7330 Brande (DK)
(72) Inventor: Mohamed, Khaalid, 9210 Aalborg SØ (DK)
(74) Representative: SGRE-Association

(57) **Abstract**

A method for detecting at least one property of a component (13, 27, 36) of or for a wind turbine blade (3), comprising:
inducing (S1), by applying a primary magnetic field (25), a current (24) in a microwire (15) integrated in the component (13, 27, 36),
measuring (S2) a secondary magnetic field (26) generated by the current (24) induced in the microwire (15), and
determine (S1), based on the measured secondary magnetic field (26), the at least one property of the component (13, 27, 36).

The method provides for efficient contactless structural health monitoring.

## Description

The present invention relates to a method for detecting at least one property of a component of or for a wind turbine blade, to a method for manufacturing a fiber composite component for a wind turbine blade with an integrated microwire and to a manufacturing or maintenance system for a wind turbine blade.

One way to produce more power using a wind turbine under given wind conditions is to increase the size of the blades. However, the manufacture of wind turbine blades is becoming increasingly difficult for increasing blade sizes.

Structural health monitoring of wind turbine blades is also becoming more important as blade sizes increase. One of the most critical defects are laminate wrinkles. They pose a significant structural risk to the integrity of the entire blade.

Currently, there are several ways to detect such wrinkles. One way is through manual inspection of the blades which requires operators to physically measure the wrinkles. Inaccessible regions inside the blade are scanned using a scanning robot. The robot is configured to detect wrinkles on the inner laminate. Finally, it is also known to detect wrinkles using ultrasound scanning.

Manual inspection has the limitation of being error-prone, especially when no sample is extracted from the wrinkle location. Another difficulty in this method is that the operator needs to be able to access the wrinkle location. The handling of scanning robots can be difficult and complex. Ultrasound scanning can be inaccurate where the laminate contains porosities or air bubbles. Also, ultrasound scanning cannot detect the severity or angle of a wrinkle. Even more, ultrasound scanning requires contact and the presence of water on the laminate surface. Scanning may also be inefficient for the entire surface. Hence, typically only critical areas are scanned such as spar caps, bond lines etc.

It is thus one object of the present invention to provide an improved approach to detect wrinkles and other defects in a wind turbine blade.

According to a first aspect, there is provided a method for detecting at least one property of a component of or for a wind turbine blade, comprising:
inducing, by applying a primary magnetic field, a current in a microwire integrated in the component,
measuring a secondary magnetic field generated by the current induced in the microwire, and
determining, based on the measured secondary magnetic field, the at least property of the component.

Advantageously, this method provides for a non-contact defect detection in wind turbine blades. This detection can be used during the manufacture of the blade or afterwards. It can even be used during routine inspection when the wind turbine is in operation out in the field. In particular, the method can be used for structural health monitoring of the wind turbine blade. In other embodiments, a resin flow front in the component and/or a temperature of the component (in the process of being made) can be detected.

Microwires are miniaturized magnetic contactless sensors of physical quantities such as mechanical strain, temperature, pressure, stress, torsion etc. Microwires have a diameter of, for example, smaller than 100 pm. Typical ranges of diameters of microwires are 3 to 70 pm. The microwires may have a length of less than 10 cm. Typically, they have a length between 1 and 4 cm. The sensing range may be up to 10 cm from a sensing head (for example comprising an excitation/induction coil and a sensing/measuring coil) to the respective microwire. Measurements can be obtained through air or other materials, even metallic or magnetic materials.

The component of the wind turbine blade may be a portion of the cured and assembled blade (right after manufacturing is completed or when the blade is in operation on a wind turbine). The component for a wind turbine may be a non-crimped fabric, a preform, an upper or lower shell etc., i.e., components which are used in the manufacture of the wind turbine blade.

According to an embodiment, the microwire comprises a ferromagnetic and/or metallic core and/or a glass coating.

According to an embodiment, the at least one property is a mechanical or thermal property of the fiber composite component.

According to an embodiment, the at least one property is a strain undergone by the component and/or a temperature of the component.

According to an embodiment, the method further comprises:
determining that a wrinkle is present in the fibers of the component based on the determined at least one property.

The wrinkle results in a change of the measured secondary magnetic field compared to areas where the fibers are stretched, i.e., straight (non-wrinkled).

According to a further embodiment, the microwire is integrated in or attached to a non-crimped fabric of the fiber composite component.

A non-crimped fabric has one or more layers of parallel, stretched fibers. Those fibers show no undulations. They are non-woven. The fibers may be made out of glass, carbon or aramid, for example. The fibers may be fixed to one another at crossing points. The fixation occurs, for example, by use of a stitching yarn. In addition or alternatively, the fibers may be fixed to one another using a bonding technology. For example, an adhesive (binder) is added for bonding the fibers together. For example, the following types of fabrics are known: unidirectional fabrics which are created by fixing a group of parallel fibers, biaxial fabrics in which two sets of parallel threads are fixed in the direction of two axes, and multi-axial fabrics in which several sets of parallel threads are fixed in the direction of different axes. Non-crimped fabrics have advantageous mechanical properties as the fibers are in a stretched form and the fibers can be orientated specifically for the respective application.

As the fibers in the non-crimped fabric are straight (when not wrinkled), a microwire may be easily aligned with them, that is arranged parallel with those fibers. When a wrinkle occurs, the microwire is also deformed, representing the deformed shape of the fibers.

According to a further embodiment, the component is a portion of an airfoil profile of the wind turbine blade.

Non-contactless structural health monitoring is particularly important in the airfoil shell.

According to a further embodiment, the microwires are integrated in an outermost ply of the airfoil shell.

This outermost ply is also known as "veil". The veil is made of a specific fiber material resulting in a high-quality finishing surface of the airfoil shell. Wrinkles in this ply are particularly important to detect.

According to a further embodiment, the microwire orientated parallel to at least one adjacent fiber and/or in the axial direction of the wind turbine blade.

The flow of forces during operation of the wind turbine is mainly along the axial direction of the blade. Therefore, it is advantageous to monitor in particular those fibers extending in the axial direction.

According to a second aspect, a method for manufacturing a fiber composite component for a wind turbine blade with an integrated microwire is provided, comprising:
a) providing a non-crimped fabric with a microwire,
b) infusing the non-crimped fabric with a resin, and
c) curing the resin to obtain the fiber composite
component with the integrated microwire.

The microwire may be integrated in the non-crimped fabric in step a), or may be attached to the surface of the non-crimped fabric in step a). This results in an efficient process of introducing a microwire in a fiber composite component of a wind turbine blade.

According to an embodiment, a method for detecting at least one property of the fiber composite component of or for a wind turbine blade is applied during, after and/or before any of steps b) or c) above. The method steps thus performed during, after and/or before any of steps b) or c) comprise:
inducing, by applying a primary magnetic field, a current in a microwire integrated in the fiber composite component,
measuring a secondary magnetic field generated by the current induced in the microwire, and
determining, based on the measured secondary magnetic field, the at least property of the fiber composite component.

Thus, it is possible to determine wrinkles and other defects early in the manufacturing process of a wind turbine blade.

The embodiments of the method for detecting at least one property of a component described above equally apply here.

According to an embodiment, the non-crimped fabric is provided in step a) by laying down rovings using a feeding gage, wherein the microwire is laid down between or on top of the rovings using the feeding gage.

Laying down the rovings and the microwire in one step is efficient. The microwire may be laid down separate from the rovings (i.e. not integrated into a roving).

According to a further embodiment, the non-crimped fabric is provided in step a) by laying down rovings using a feeding gage, wherein the microwire is integrated in at least one of the rovings before feeding the at least one roving using the feeding gage.

By integrating the microwire into at least one roving, the microwire can be handled and added to the non-crimped fabric in an efficient manner.

According to a further embodiment, in step a), a binder is added to the non-crimped fabric, and the microwire is bonded to the non-crimped fabric using the binder.

In particular, the microwire is bonded to a surface of the non-crimped fabric. This is efficient as the binder is, typically, added to the non-crimped fabric in any case to bond a first non-crimped fabric to a second non-crimped fabric to form a preform. Preforms are used at a later stage to build up the fiber layer up in the mold for manufacturing the wind turbine blade.

According to a further embodiment, the method further comprises:
in step a), providing at least two non-crimped fabrics, and arranging the wire between the at least two non-crimped fabrics, and
bonding the at least two non-crimped fabrics together using a or the binder.

Thereby, the microwires are easily integrated in between two layers of non-crimped fabrics.

According to a further embodiment, the method comprises:
in step a), creating a fiber layup comprising the non-crimped fabric in a mold and attaching the microwire to the non-crimped fabric, and
in step b), infusing the fiber layup with the resin.

For example, the microwire may be attached to the non-crimped fabric using a glass tape. For example, such glass tapes are used in places where preforms abut or overlap and the glass tape covers a resulting gap or step.

According to a third aspect, a manufacturing or maintenance system for a wind turbine blade is provided, comprising:
a component and a microwire integrated in the component,
an induction unit for inducing, by applying a primary magnetic field, a current in the microwire,
a measuring unit for measuring a secondary magnetic field generated by the current induced in the microwire, and
a determination unit for determining, based on the measured secondary magnetic field, at least one property of the fiber composite component.

Embodiments and features described with reference to the first aspect apply, mutatis mutandis, to the second and third aspect, and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows, in a perspective view, a wind turbine according to an embodiment;
Fig. 2 shows, in an enlarged section view, a sample having fibers making a wrinkle;
Fig. 3 shows a diagram of maximum strain vs. number of cycles for a fiber composite component with and without wrinkles;
Fig. 4 shows schematically a maintenance or manufacturing system according to an embodiment;
Fig. 5 shows schematically details of components used in Fig. 4;
Fig. 6 illustrates the measuring principle used in Figs. 4 and 5;
Fig. 7 shows schematically a microwire in a section view;
Fig. 8 shows, in a perspective view, an embodiment of a non-crimped fabric;
Fig. 9 shows portions of a feeding gage according to an embodiment;
Fig. 10 shows a roving including a microwire;
Fig. 11 shows, in a perspective view, two non-crimped fabrics being bonded together with a microwire in between;
Fig. 12 shows, in a schematic section view, a component with multiple microwires arranged between layers;
Fig. 13 shows the embodiment of Fig. 12, where the microwires are arranged inside respective layers;
Fig. 14 shows, in a perspective view, two molds arranged side by side including preforms;
Fig. 15 shows, in a perspective view, two molds with microwires arranged on the respective mold surfaces;
Fig. 16 shows a section of an airfoil produced with one of the methods illustrated in Fig. 14 or Fig. 15;
Fig. 17 illustrates, in a flow diagram, a method for detecting at least one property of a component of a wind turbine blade according to an embodiment; and
Fig. 18 shows, in a flow diagram, a method for manufacturing a fiber composite component for a wind turbine blade with an integrated microwire.

In the Figures, like reference numerals designate like or functionally equivalent elements, unless otherwise indicated.

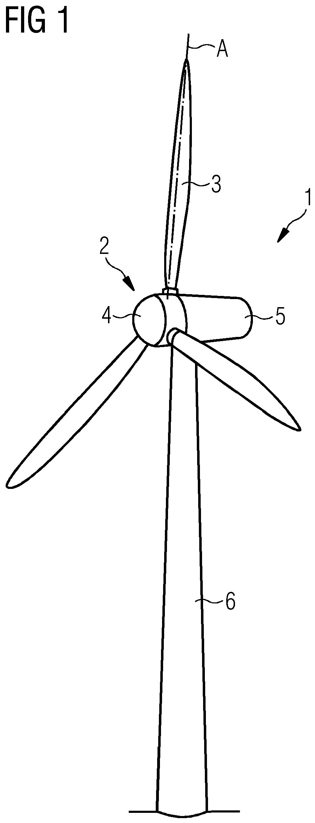

Fig. 1 shows a wind turbine 1 according to an embodiment. The wind turbine 1 comprises a rotor 2 having two or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1.

The tower may be connected to a monopile or concrete foundation in the ground or sea bed.

The blades 3 are made of one or more fiber composite components. Examples of such components are multiple blade segments joined to each other or a lower and upper blade shell bonded to each other to make up the blade. The or each composite component comprises fibers such as glass, carbon or aramid fibers and a resin (also called a resin matrix) in which the fibers are embedded. Typically, a fiber layup is formed in a mold. The mold is closed or the fiber layup is covered with a vacuum foil. A vacuum is created, and the fibers are infused with the resin. Then, applying heat and/or pressure, the resin is cured to form the fiber composite component.

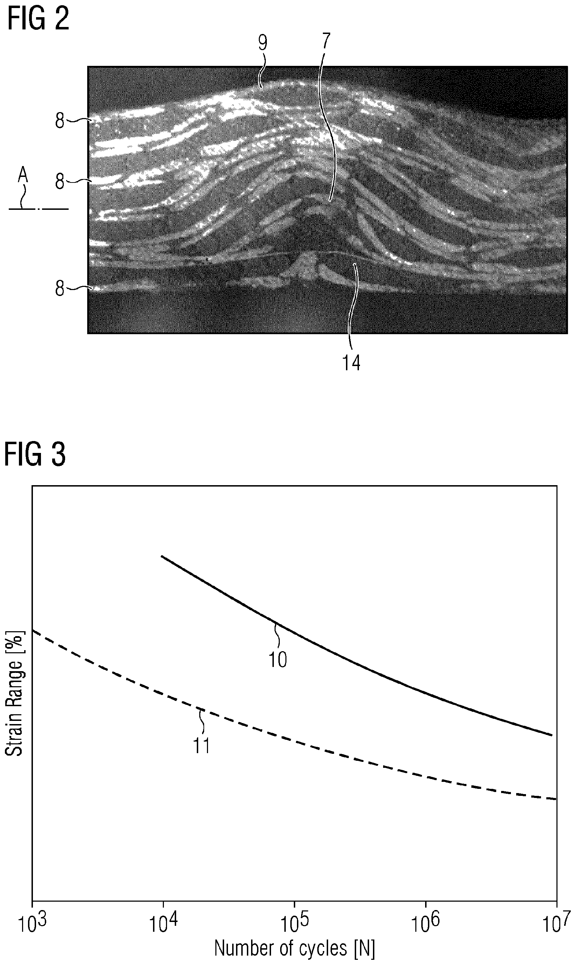

Especially, when the mold is closed and/or during curing of the resin, pressure is applied to the dry fibers or the fibers already embedded in the still soft resin matrix. This may result in the formation of wrinkles 7 as shown in Fig. 2.

Once a blade 3 is cured, it is inspected for defects. When a defect is suspected or routinely, a sample may be taken from the respective blade surface by way of a cut-out being made. Fig. 2 shows such a sample (cut-out) being taken from a blade 3 and being enlarged with a microscope.

Fig. 2 shows multiple fibers 8 substantially extending in the axial direction A of the blades 3. The axial direction A is also shown in Fig. 1, said axial direction A being the direction oriented from the blade root to the blade tip. The fibers 8 are embedded in a resin 14. However, in the portion illustrated in Fig. 2, the fibers 8 form wrinkles 7. A wrinkle 7 herein is understood as an arched portion of each fiber 8 extending at right angles with respect to the axial direction A. The wrinkles 7 may result in an undulation 9 on an outside surface of the blade 3. Such undulations 9 are, by comparison, easy to detect by operators doing a visual inspection of a blade 3. However, in other cases, no surface undulations 9 are visible. In such cases, the wrinkles 7 are much harder to find.

Fig. 3 shows a diagram of maximum strain vs. number of cycles. The solid line 10 indicates the maximum strain taken by fiber composite components without wrinkles 7. On the other hand, the dashed line 11 indicates the maximum strain taken by components having wrinkles 7. It is evident that components with wrinkles show a significantly lower maximum strain than components without wrinkles. It is therefore an important objective in structural health monitoring to detect any wrinkles 7 present inside a fiber composite component of a blade 3.

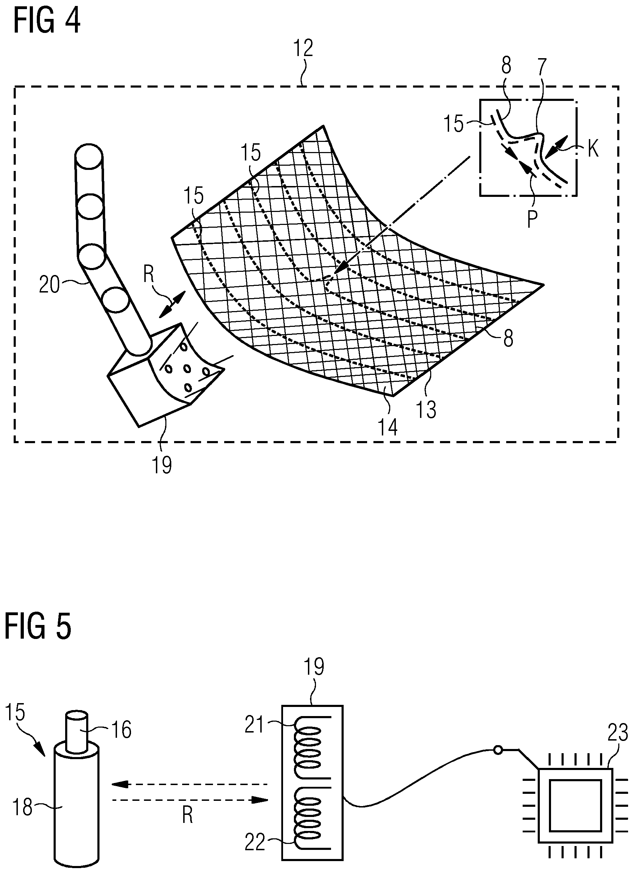

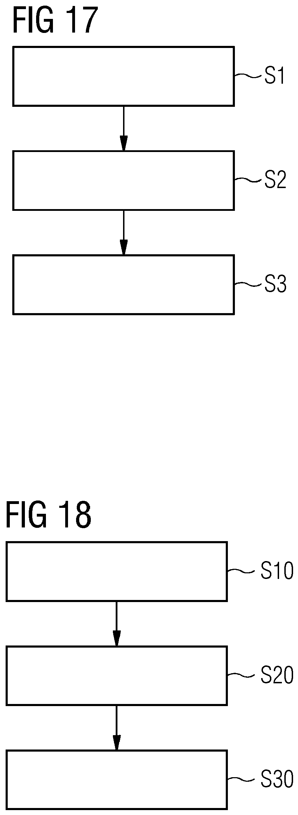

To this end, according to an embodiment, a maintenance and/or manufacturing system 12 is provided. On the right-hand side of Fig. 4, there is shown a (fiber composite) component 13, such as an airfoil shell. The component 13 has fibers 8. The fibers 8 may or may not (yet) be embedded in a resin 14. The resin 14 may still be soft or already cured. That is, the method comprising method steps S1 to S3 as illustrated in Fig. 17 may be used in different stages of the manufacture of a blade 3 or even afterwards, also including inspection when the blade 3 is already installed on the wind turbine 1 operating out in the field.

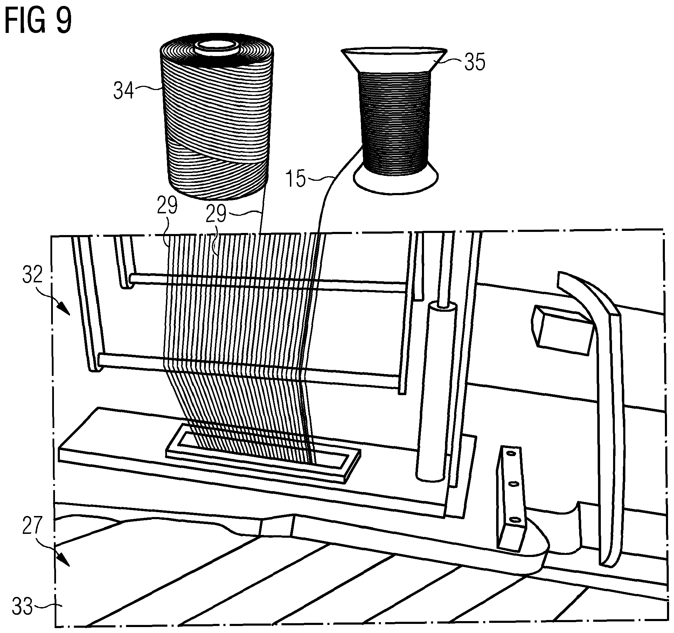

Returning to Fig. 4, it is shown that the component 13 includes multiple microwires 15. The microwires 15 are shown in dashed lines in Fig. 4. The microwires 15 are integrated into the component 13, for example as will be explained later in connection with Figs. 9 to 16 and 18.

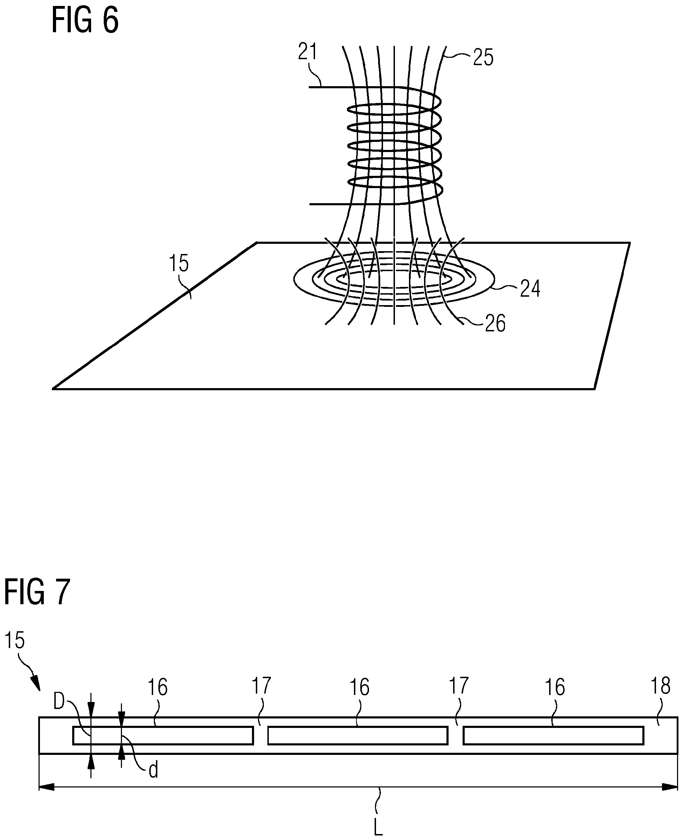

Fig. 7 shows an embodiment of a microwire 15 in a lengthwise section view. The microwire 15 is configured to act as a sensor to determine at least one property of the component 13. These properties may be mechanical, thermal, and other properties. For example, a property is a strain undergone by the component 13 or a temperature of the component 13 (for example, a temperature of the component 13 while being infused with the resin 14 which may allow determination of a flow front of a resin).

To this end, the microwire 15 includes, for example, a ferromagnetic and/or metallic core 16. Multiple of these cores 16 may be arranged coaxially behind one another, forming gapes 17 between adjacent cores 16. The cores 16 are covered with a glass coating 18. The glass coating 18 also fills the gaps 17. The glass coating 18 electrically isolates the cores 16 from the surroundings and also protects the cores 16 against corrosion. Advantageously, the glass coating 18 structurally integrates with other fiber materials such as surrounding glass fibers (not shown) when installed in the component 13. Also, the glass coating 18 can be embedded effectively in a resin 14, forming a bond with such resin 14 during curing of the component 13, for example.

The microwire 15 may have a length L of, for example, between 1 and 4 cm. Further, the microwire 15 may have a diameter D of, for example, 3 to 70 µm. The preferably circular cross-section of the microwire 15 is not shown. The cores 16 may have a diameter d of, for example, 1 to 50 pm, leaving a thickness of the glass coating 18 to range from 2 to 20 pm, preferably.

Now returning to Fig. 4, there is shown at the top right an enlarged view illustrating a fiber 8 and a microwire 15 arranged in parallel with the fiber 8. When a pressure force P acts on the component 13, for example during manufacture of the same, this may cause the fiber 8 and the microwire 15 lying alongside the fiber 8 to form a wrinkle 7. The wrinkle 7 extends substantially perpendicularly to the direction of the pressure force P. The perpendicular direction is indicated with reference numeral K.

The microwire 15 having such a wrinkle 7 can be detected using a sensor head 19 as will be explained further on. The sensor head 19 may be held by a robot arm 20 such that a distance R of the sensor head 19 to the microwires 15 does not exceed 10 cm as the sensor head 19 moves over the component 13.

As illustrated in Fig. 5 schematically, the sensor head 19 may include an induction unit 21, such as an induction coil. Further, the sensor head 19 may include a measuring unit 22 such as a sensing coil 22. The sensor head 19 may be connected by a wire or wireless to a determination unit 23 such as a microprocessor including a computer program.

Fig. 6 illustrates the measuring principle used by the measuring head 19 in respect of one or more microwires 15. The induction unit 21 induces a current 24 such as an eddy current in the microwire 15, that is in its cores 16. This is the result of a primary magnetic field 25 applied by the induction unit 21 when an electric current flow through its coil, in particular. For example, an alternating current may be used alternating at a frequency of up to 20,000 Hz. The induction of a current 24 corresponds to step S1 in Fig. 17.

Then, in step S2, the measuring unit 22 measures a secondary magnetic field 26 generated by the current 24 induced in the microwire 15. The secondary magnetic field 26 results in a current flowing in the measuring unit 22, in particular in its coil as illustrated in Fig. 5.

In step S3, the determination unit 23 determines, based on the measured secondary magnetic field 26, that is based on the current flowing through the coil of the measuring unit 22, the at least one property of the component 13. In particular, the wrinkled shape of the microwire 15 changes the magnetic field 26 in such a way - as compared to the other straight portions of the microwire 15 - that the wrinkle 7 can be detected with certainty.

Advantageously, this detection is contactless. As illustrated in Fig. 5, the measuring distance R may be filled with a volume of air, but may also comprise solid materials, such as resin, fibers, metals, or other materials. This allows the measuring principle as described above to be applied even when measuring 10 cm deep into the blade 3.

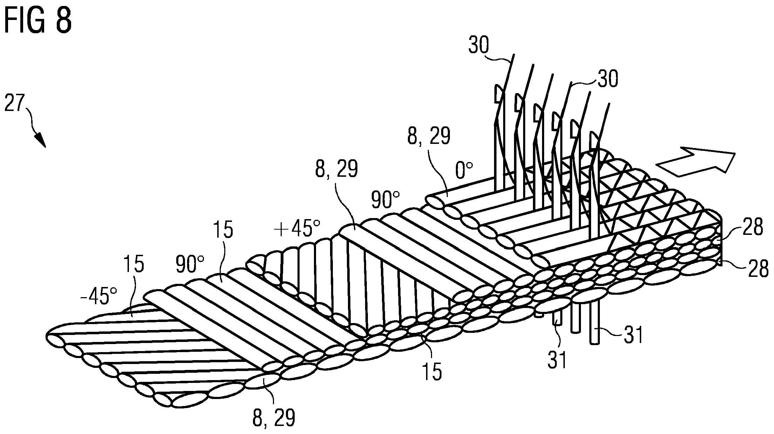

Fig. 8 shows, in a perspective view, a non-crimped fabric 27. The non-crimped fabric 27 is comprised of one or more layers 28 of fibers 8. The fibers 8 in each layer are stretched fibers arranged in parallel. Typically, the fibers 8 are arranged in bundles, so-called rovings 29. The layers 28 are stitched together using a stitching yarn 30. Corresponding stitching needles 31 are used to stitch the layers 28 together. Instead or in addition to the stitching yarn 30 being used, the fibers 8, rovings 29 and/or layers 28 may be held together using a binder (not shown) added to the fibers 8. The wires 8 or rovings 29 may be arranged at angles 0°, +45°, -45° and 90° in the different layers 28.

The non-crimped fabric 27 may include, in its dry state (no resin added yet), one or more microwires 15. The microwires 15 may be arranged on top of an outermost layer 28 of the non-crimped fabric 27. In another embodiment, the microwires 15 may be arranged within one or more layers 28 of the non-crimped fabric 27. According to yet another embodiment, the microwires may be arranged between layers 28 of the non-crimped fabric 27.

Fig. 9 illustrates, in a perspective view, a feedings gage 32. Multiple rovings 29 are fed into the feeding gage 32 and laid down by the feeding gage 32 on a table 33. As the rovings 29 are laid down, a stitching device (not shown in Fig. 9) may stitch, using the stitching needles 31 (Fig. 8), the rovings 29 together with rovings of a layer previously laid down. As illustrated for one roving 29, such a roving may be fed from a bobbin 34. The feeding gage 32 may be configured to, in addition to the rovings 29, feed a microwire 15 (e.g., separately from the rovings 29) onto the table 33 and lay the microwire 15 down between or on top of the rovings 29 of one layer 28 (Fig. 8). The microwire 15 may be fed using a reel 35 into the feeding gage 32.

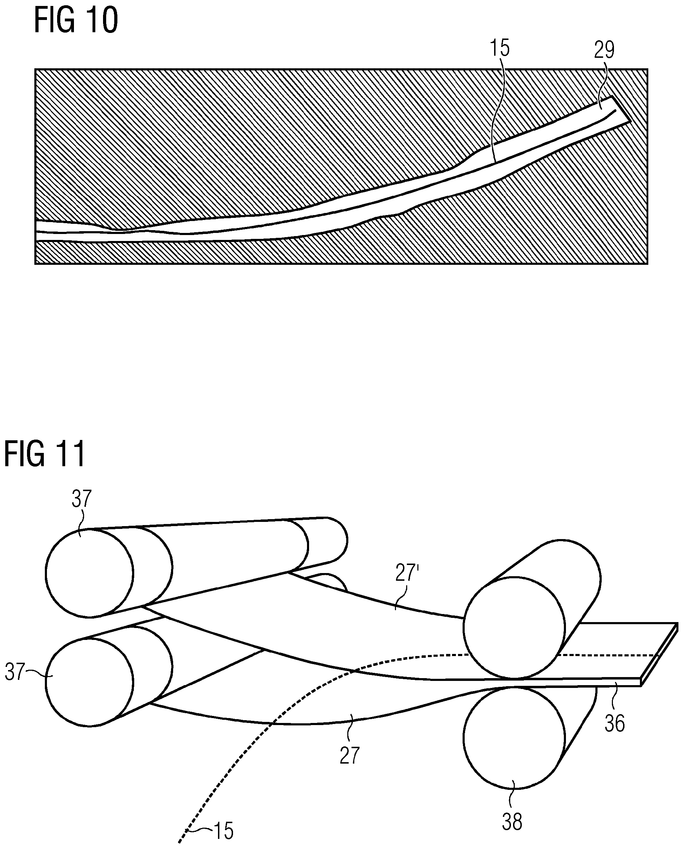

Fig. 10 illustrates another embodiment, in which a microwire 15 is integrated into a roving 29. This roving 29 is fed into the feeding gage 32. For example, the roving 29 with the integrated microwire 15 is fed from a bobbin 34. Thus, compared to Fig. 9, the microwire 15 is not fed as a separate entity, but as an integrated part of a roving 29.

Fig. 11 illustrates an embodiment of two non-crimped fabrics 27, 27' being bonded together using a binder (not shown) to form a preform 36. The microwire 15 is introduced in between the non-crimped fabric 27, 27' each supplied by, for example, rollers 37. For example, the microwire 15 is introduced in between the two non-crimped fabrics 27, 27' as shown in Fig. 11 after a binder has been applied to at least one of the non-crimped fabrics 27, 27' and before the non-crimped fabrics 27, 27' reach rollers 38 for compacting together and heating the non-crimped fabrics 27, 27' to thereby activate the binder and thus to form the preform 36.

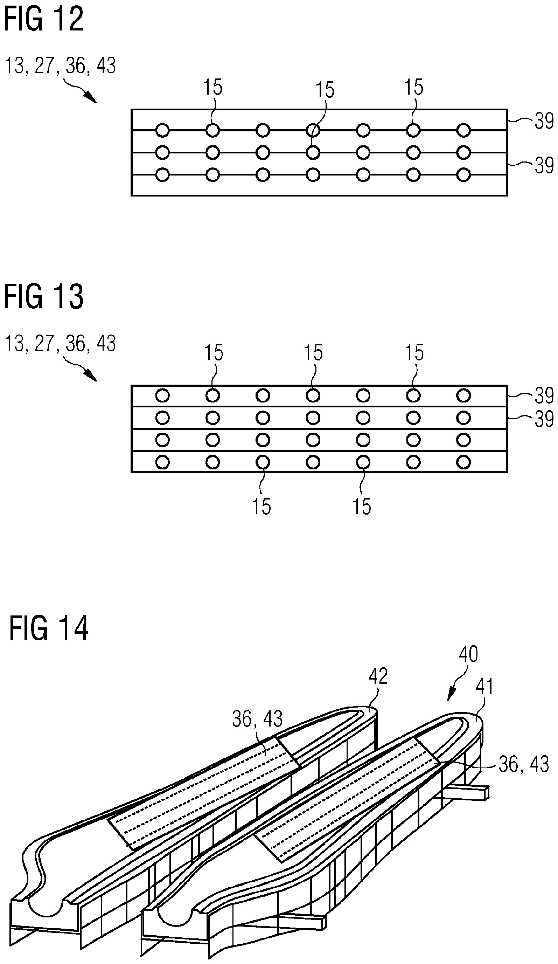

Fig. 12 illustrates a cross-section through a component 13, a non-crimped fabric 27, a preform 36 or a layup 43. The microwires 15 are arranged between layers 39. The layers 39 may correspond to the layers 28 as shown in Fig. 8. In other embodiments, the layers 39 may each correspond to a non-crimped fabric 27, 27'. In yet another embodiment, each layer 39 may correspond to a preform 36.

The embodiment of Fig. 13 shows the embodiment of Fig. 12, yet the microwires 15 being integrated in a respective layer 39.

Fig. 14 shows a mold 40 which, according to the example, is formed by two mold portions 41, 42. The mold portion 41 may correspond to a lower mold and the mold portion 42 to an upper mold. The mold portion 42 is arranged on top of the mold portion 41 to form a closed mold.

For example, preforms 36 may be arranged in each mold portion 41, 42 to form a fiber layup 43. The mold 40 is closed and resin is infused into the preform 36 and cured to form the blade 3.

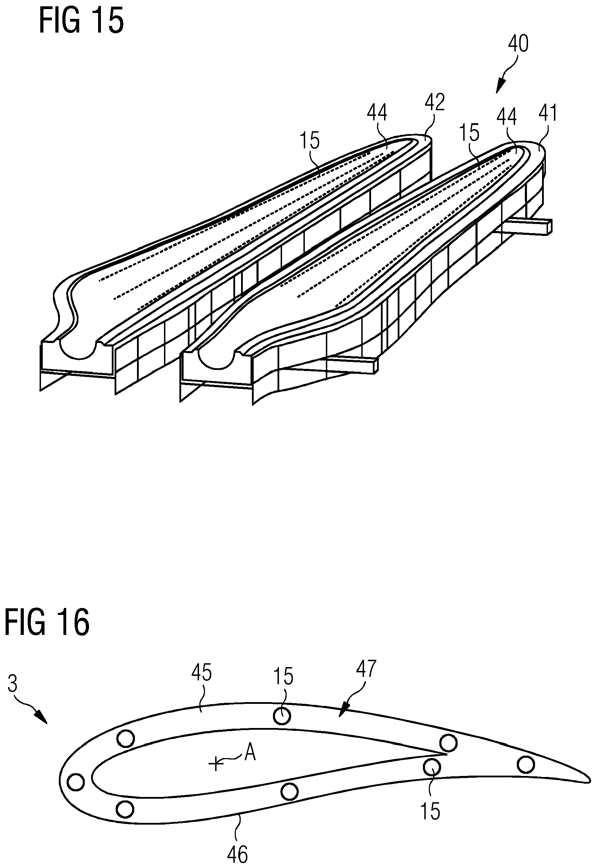

Fig. 15 shows a variation of the embodiment of Fig. 14, wherein microwires 15 are laid out onto the inner surface 44 of each mold 41, 42 and preforms (not shown) are arranged on top of the microwires 15 which thus become integrated into the outer surface of a blade 3 hence manufactured. In another embodiment, the microwires 15 are attached to a fiber layup 43 or to preforms 36 using a glass tape.

In another embodiment, a veil (not shown) is laid on top of the microwires 15 in Fig. 15, the microwires 15 thus becoming integrated into the outer (finishing) surface of the blade 3 upon infusion with a resin and curing.

Fig. 16 shows a cross-section of a blade 3 with an upper shell 45 and a lower shell 46 forming an airfoil profile 47. The microwires 15 extend along the axial direction A of the blade 3.

Fig. 18 generally illustrates the process of manufacturing a fiber composite component 13 for a wind turbine 1 with an integrated microwire 15.

In step S10, a non-crimped fabric 27 is provided with a microwire 15. At this point, the non-crimped fabric may still be comprised only of one or more layers 28 of dry fibers 8 or the non-crimped fabric 27 may already be in the shape of a preform 27, for example.

In a step S20, the non-crimped fabric 27 is infused with a resin 14.

In step S30, the resin 14 is cured to obtain the fiber composite component 13.

Steps S1 - S3 (Fig. 17) may by applied during, before or after steps S20 or S30 to detect wrinkles already during or after the manufacturing process.

Although the present invention has been described in accordance with preferred embodiments, it is obvious for the person skilled in the art that modifications are possible in all embodiments.

## Claims

1. A method for detecting at least one property of a component (13, 27, 36) of or for a wind turbine blade (3), comprising:
inducing (S1), by applying a primary magnetic field (25), a current (24) in a microwire (15) integrated in the component (13, 27, 36),
measuring (S2) a secondary magnetic field (26) generated by the current (24) induced in the microwire (15), and
determine (S3), based on the measured secondary magnetic field (26), the at least one property of the component (13, 27, 36).

2. The method according to claim 1, wherein the microwire (15) comprises a ferromagnetic and/or metallic core (16) and/or a glass coating (18).

3. The method according to claim 1 or 2, wherein the at least one property is a strain undergone by the component (13, 27, 36) and/or a temperature of the component (13, 27, 36) .

4. The method according to one of claims 1 - 3, further comprising:
determining that a wrinkle (7) is present in fibers (8) of the component (13, 27, 36) based on the determined at least one property.

5. The method according to one of claims 1 - 4, wherein the microwire (15) is integrated in or attached to a non-crimped fabric (27).

6. The method according to one of claims 1 - 5, wherein the component (13, 27, 36) is a portion of an airfoil profile (47) of the wind turbine blade (3).

7. The method according to claim 6, wherein the microwire (15) is integrated in an outermost ply (39) of the airfoil profile (47).

8. The method according to one of claims 1 - 7, wherein the microwire (15) is oriented parallel to at least one adjacent fiber (8) of the component (13, 27, 36) and/or in the axial direction (A) of the wind turbine blade (3).

9. A method for manufacturing a fiber composite component (13) for a wind turbine blade (3) with an integrated microwire (15), comprising:
a) providing (S10) a non-crimped fabric (27) with a microwire (15),
b) infusing (S20) the non-crimped fabric (27) with a resin (14), and
c) curing (S30) the resin (14) to obtain the fiber composite component (13) with the integrated microwire (15).

10. The method according to claim 9, wherein, during, after and/or before step b) or c), the method according to one of claims 1 - 8 is performed.

11. The method according to claim 9 or 10, wherein the non-crimped fabric (27) is provided in step a) by laying down rovings (29) using a feeding gage (32), wherein:
the microwire (15) is laid down between or on top of the rovings (29) using the feeding gage (32), and/or
the microwire (15) is integrated in at least one of the rovings (29) before feeding the at least one roving (29) using the feeding gage (32).

12. The method according to one of claims 9 - 11, wherein, in step a), a binder is added to the non-crimped fabric (27), and the microwire (15) is bonded to the non-crimped fabric (27) using the binder.

13. The method according to one of claims 9 - 12, comprising:
in step a), providing at least two non-crimped fabrics (27, 27') and arranging the microwire (15) between the at least two non-crimped fabrics (27, 27'), and
bonding the at least two non-crimped fabrics (27, 27') together using a or the binder.

14. The method according to one of claims 9 - 13, comprising:
in step a), creating a fiber layup (43) comprising the non-crimped fabric (27) in a mold (40) and attaching the microwire (15) to the non-crimped fabric (27),
in step b), infusing the fiber layup (43) with resin (14) .

15. A manufacturing or maintenance system (12) for a wind turbine blade (3), comprising:
a component (13, 27, 36) and a microwire (15) integrated in the component (13, 27, 36),
an induction unit (21) for inducing, by applying a primary magnetic field (25), a current (24) in the microwire (15),
a measuring unit (22) for measuring a secondary magnetic field (26) generated by the current (24) induced in the microwire (15), and
a determination unit (23) for determining, based on the measured secondary magnetic field (26), the at least one property of the component (13, 27, 36).
